# EUROPEAN PATENT SPECIFICATION

(11) **EP 2 443 907 B1**
(45) Date of publication and mention of the grant of the patent: **13.03.2013**
(21) Application number: 10740261.2
(22) Date of filing: 15.06.2010
(51) Int. Cl.: H04W 88/08, H04B 7/06, H04W 16/28

(54) **SWITCHED ANTENNA SYSTEM FOR A LOCAL WIRELESS NETWORK**
SCHALTANTENNENSYSTEM FÜR EIN LOKALES DRAHTLOSES NETZWERK
SYSTÈME D'ANTENNE COMMUTÉE POUR UN RÉSEAU LOCAL SANS FIL

(30) Priority: 17.06.2009 IT MI20091068; 26.06.2009 US 220728 P
(43) Date of publication of application: 25.04.2012
(73) Proprietor: ADB Broadband S.p.A., 20126 Milano (IT)
(72) Inventor: RICCI, Fabrizio, I-20126 Milano (IT); GARBELLI, Daniele, I-20126 Milano (IT)
(74) Representative: Pawlowski, Adam
(86) International application number: PCT/IB2010/001481
(87) International publication number: WO 2010/146454

(56) References cited:
- US-A1- 2008 051 149

## Description

The present invention generally relates to local wireless networks (LANs).

These network types typically comprise one or more base stations or access points for the connection to an external network (typically wired), and a plurality of stations. The access points typically transmit packets of information to one or more stations according to a wireless communication protocol such as, for example, those defined by the IEEE 802.11 and IEEE 802.16 standards well known in the art.

WO 2006/023239 describes a method and a system for the transmission of data to a remote receiving node on a wireless link. The system described comprises a communication device for converting data packets into radio frequency (RF) signals, an antenna apparatus comprising a plurality of individually selectable antenna elements and a processor. The antenna apparatus comprises a selector device for selectively coupling one or more of the antenna elements to the communication device in a manner so as to obtain different radiation patterns, also called antenna configurations. The processor is adapted to create a table for each remote receiving node which includes data related to the link quality obtained for each antenna configuration. For example, such data is the success ratio and the received signal strength indicator (RSSI), as measured, for example, on a ACK packet (according to the standard IEEE 802.11) received by the remote receiving node in response to a packet transmitted to the remote receiving node. According to the described method, when the system must transmit a packet to a remote receiving node, the processor selects the antenna configuration to be used for the transmission of such packet on the basis of the data contained in the table associated with such receiving node. For example, the processor can select the antenna configuration which allows obtaining the best success ratio or the best RSSI. Upon reception of an ACK packet from the remote receiving node, in response to the transmitted packet, the processor is adapted to update the data contained in the table. If the receiving node does not receive the packet, the processor retransmits the packet by using another antenna configuration suitably selected from the table. After a consecutive number of packets have been successfully transmitted, the method described by WO 2006/023239 provides that for the transmission of a packet, a non-used test antenna configuration is tested. This allows updating the table data relative to non-used antenna configurations.

US 2007/0042715 describes a wireless network comprising a plurality of stations and an access point for connecting the stations to a fixed network infrastructure. The access point comprises a configurable antenna system that can be configured according to a certain number of antenna configurations. The access point operates cyclically according to a normal operating mode and an antenna optimization mode. The antenna optimization mode is used by the access point for collecting, for every station, data related to the quality of the signal in every possible antenna configuration and to store it in a suitable table. During the normal operating mode, the access point can operate according to three operating states: a first state in which the access point transmits packets to a station; a second state in which the access point receives packets from a station, and a third state in which the access point is idle. In the first and second state, the access point uses the antenna configuration which, according to the data stored in the aforesaid table, allows obtaining the best connection with the station. In the third state, the access point uses the antenna configuration which, according to the data stored in the aforesaid table, allows obtaining the best connection with all the stations on average.

WO 2008/077113 describes a wireless network comprising a plurality of stations and an access point for connecting the stations to a fixed network infrastructure. The access point comprises a configurable antenna system that can be configured so as to generate a certain number of antenna configurations. In a MIMO (multiple-in, multiple-out) embodiment, the access point comprises several reception/transmission paths, each connectable, by means of switch, to one of two antennae. The access point operates cyclically according to a normal operating mode and an antenna optimization mode. The antenna optimization mode is used by the access point for collecting, for all the stations, data relative to the quality of the signal obtained for all the reception/transmission paths in all the possible relative antenna configurations and store them in a suitable connection matrix.

The Applicant observes that the system described by WO 2006/023239 has the following disadvantages. The creation, the use and particularly the continuous update of a table which contains data related to the link quality for each antenna configuration leads to an application overhead and a reduction of the maximum average transmission speed of useful data (i.e. of the maximum throughput) of the system. In addition, when the processor tests the transmission of a packet on a test antenna configuration, it may occur that such test configuration is unsuccessful and that the packet is not received by the remote receiving node, with consequent loss of the transmitted data. If -in order to prevent losing data- the processor tries to resend the lost packet to the receiving node over other antenna configurations until one is found that gives a successful result, however such retransmission process leads to an increase of the application overhead and a further throughput reduction of the system.

The Applicant also observes that this document describes a system comprising a single communication device (i.e. a single reception/transmission path) to which one or more antennae can be connected at a time for obtaining different antenna configurations.

With regard to the systems described by US 2007/0042715 and WO 2008/077113, the applicant observes that these are disadvantageous because the creation, use and, particularly, the continuous updating of a table which contains data related to the link quality for all or most of the possible antenna configurations leads to an application overhead and a throughput reduction of the system. In addition, the cyclical operating according to an antenna optimization mode, which provides for the interruption of the normal data traffic, involves an increase of the application overhead and a further throughput reduction of the system.

A US patent application US2008/0051149 discloses a method and system that selects a subset of antennas from a set of antennas to transmit user data in a wireless communication system. The user data is transmitted during a first transmission time intervals (TTI) using a first subset of antennas. Pilot tones are transmitted during a second TTI using a second subset of antennas. Corresponding channel qualities are estimated for the first subset of antennas and the second subset of antennas and a best subset of antennas is selected. The system does not involve a mechanism to limit the amount of switching between antennas and decrease the amount of signal testing.

The Applicant faced the technical problem of increasing the coverage of a wireless communication device for services which require high throughput, at the same limiting the application overhead in computational terms and/or in terms of transmission of additional communications.

The Applicant found that such problem can be solved by making the wireless communication device operate according to a "normal" mode and a "test" mode. In the normal mode, the transceivers of the device are connected to a subset of antennae. The link quality is also evaluated, such that the used antennae can be subdivided into subsets according to the evaluated quality. In the test mode, a subset of the transceivers remains connected to the corresponding subset of antennae which gave the best link quality, and the remaining part of the transceivers is connected to a corresponding number of antennae, at least in part different from those which gave worst quality, in such a manner searching for an improved configuration.

In a first aspect thereof, the present invention regards a method for receiving and transmitting data packets in a wireless communication device, said device comprising M transceivers, with M≥2, N antennae, with N>M, each connectable to at least one of the M transceivers, and a switching system adapted to connect each of said M transceivers to only one of said N antennae at a time, the method comprising:
a) operating the device according a normal mode in which:
   a1) the M transceivers are connected to M of said N antennae, so as to form M paths for receiving and transmitting packets from/towards another communication device over a wireless link;
   a2) quality values of the wireless link are determined for the M antennae thus connected;
b) at the end of the normal operating mode, operating the device according to a test mode in which:
   b1) from said M antennae, m best antennae, which during the normal operating mode gave better quality values, are distinguished from M-m worst antennae, which during the normal operating mode gave worse quality values, in which 1 ≤ m ≤ M-1;
   b2) m of the M transceivers are connected to said m best antennae and the other M-m transceivers are connected to respective M-m test antennae, selected from said N antennae and at least in part different from the M-m worst antennae;
   b3) quality values of the wireless link are determined at least for the M-m test antennae;
c) at the end of the test operating mode, identifying the best antennae, in terms of link quality values, among the M-m test antennae and the M-m worst antennae identified in b1);
d) resuming execution of the method starting from a) in which in a1) the M transceivers are connected to the m best antennae identified in b1) and to the M-m best antennae identified in c).

The invention allows improving the coverage for services which require high throughput (for example, high definition video transmission services at at least 10 Mbit/s) by means of an algorithm which, with respect to the above-described prior art solutions, leads to a low application overhead without increasing the costs of the device.

In fact, considering that each of said M transceivers can be connected to only one of said N antennae at a time and - during the test operating modes in which M-m transceivers are connected to M-m test antennae- the other m transceivers are connected to the m best antennae, the invention allows always ensuring a minimal link (equal to that ensured by the m best antennae), also during the test steps in which the M-m test antennae could have very poor link quality and lead to (in case the transmission/reception was only based on such antennae) the loss of the arriving data packets.

Due to this, the test steps can be carried out during the normal data reception/transmission of the device. This eliminates the need of the solutions of the prior art to interrupt the normal data traffic during the antenna optimization test mode.

In addition, with respect to the known solutions which require, for each station associated with an access point, the creation, use and particularly the continuous updating of a table which contains data related to the link quality for all or most of the possible antenna configurations, the invention requires the management of a reduced number of resources.

During the present description, the expression:
- "receiving and transmitting path" is used for indicating any connection between a transceiver and a single antenna which allows the reception and transmission of data in a wireless communication device;
- "antenna" is used for indicating a single passive structure, possibly composed of several radiating elements, having a non-variable radiation pattern;
- "directional antenna" is used for indicating an antenna having a non-isotropic radiation pattern, typically on a same reference plane of interest;
- "omnidirectional antenna" is used for indicating an antenna having a substantially isotropic radiation pattern, at least over a reference plane of interest;
- "coverage" is used for indicating an area in which a pair of wireless communication devices is capable of establishing a data link at a determined throughput value (e.g., a throughput value for high definition video transmission services can be of 10 Mbit/s);
- "throughput" or "average useful data transmission speed" of a device is used for indicating the quantity of useful data that the device is effectively able to transmit in a single time unit (typically expressed in Mbit/s). In a transmission system with time division access (such as, for example, that provided for by the standard IEEE 802.11) each device can only access the transmission medium for the communication with another device for a determined time slot. Such time slot is used for receiving and transmitting useful data from/towards the other device and for carrying out service communications and service operations which depend on the used communication protocol. The more time is used for carrying out such communications and operations, the less time remains for receiving and transmitting the useful data;
- "overhead" is used for indicating, in general, the difference between the transmission bit rate (e.g. 54 Mbit/s) and the throughput. Typically, the overhead is composed of two parts, that its:
   - the protocol overhead, which is indicative of the quantity of service operations and communications necessary for implementing the specific communication protocol employed (e.g. sending and/or transmitting ACK messages, "beacon" messages, header information, and the like), and
   - the application overhead, which is indicative of the quantity of service operations and communications necessary for implementing specific applications that can be managed by the device.

Preferably, the N antennae are of the directional type in a determined reference plane.

Preferably, m ≤ N-M.

Preferably, the normal operating mode has a determined duration of time that is greater than a determined duration of time of the test operating mode.

According to an embodiment, the duration of time of the normal operating mode terminates when a time period Tr has elapsed and the determined duration of time of the test operating mode terminates when a time period Tu has elapsed, with Tr>Tu.

According to an alternative embodiment, the duration of time of the normal operating mode terminates after the reception by the device of a number P of data packets and the determined duration of time of the test operating mode terminates after the reception by the device of a number R of packets, with P>R.

According to a preferred embodiment, the duration of time of the normal operating mode terminates upon happening of the first of two conditions: reception by the device of a number P of data packets, and termination of a time period Tr. In addition, the determined duration of time of the test operating mode terminates upon happening of the first of two conditions: reception by the device of a number R of data packets and termination of a time period Tu.

According to one embodiment, which is particularly advantageous when the device is an access point, in a2) and/or in b3), at least part of the quality values is determined on the basis of acknowledgement data packets.

Preferably, in a2), the acknowledgement data packets are processed for a time period which is shorter than the duration of time of the normal operating mode.

According to one embodiment, which is particularly advantageous when the device is an access point, in a2) and in b3), at least part of the quality values is determined on the basis of dummy data packets.

Typically, in a2), the link quality values are determined on data packets received by the device, coming from another wireless communication device.

Typically, in b3), the link quality values are determined on data packets received by the device, coming from the other wireless communication device.

Typically, in a1) the M antennae are selected according to a combination selected among a plurality of possible combinations of the N antennae.

Typically, in b2) M antennae are connected on the whole, according to a combination selected among the plurality of possible combinations of the N antennae.

Advantageously, in b1) the most recent quality values are considered.

Advantageously, in c) the most recent quality values are considered.

Advantageously, when the wireless communication device is associated with a plurality of further wireless communication devices, upon reception of a data packet coming from a device x of the plurality of further devices, it is controlled if the device is operating according to the normal mode or the test mode. In case of normal mode operation, a1) is executed by connecting the M transceivers to the m best antennae identified during the most recent execution of b1) in relation to the device x and to the M-m best antennae identified during the most recent execution of c) in relation to the device x. In addition, a2) is executed by determining the quality values for the received data packet and associating the determined values with the device x.

In case of test mode operation, b1) is executed by distinguishing on the base of quality values associated with the device x. In addition, b2) is executed by connecting the M transceivers to the m best antennae identified during the most recent execution of b1) in relation to the device x and to M-m test antennae. In addition, b3) is executed by determining the quality values for the received data packet and associating the determined values with the device x.

Advantageously, when the wireless communication device is associated with the plurality of further wireless communication devices, c) is executed for each device of the plurality of further devices.

Advantageously, in case of transmission of a data packet from the device to a device x of the plurality of further devices, the method comprises the connection of the M transceivers to the m best antennae identified during the most recent execution of b1) in relation to the device x and to the M-m best antennae identified during the most recent execution of c) in relation to the device x, independently from the fact that the device is functioning according to the normal mode or the test mode.

In a second aspect thereof, the present invention relates to a wireless communication device comprising M transceivers, with M≥2; N antennae, with N>M, each connectable to at least one of the M transceivers; a switching system adapted to connect each of said M transceivers to only one of said N antennae at a time; and modules adapted:
a) to operate the device according to a normal mode in which:
   a1) the M transceivers are connected to M of said N antennae so as to form M paths for receiving and transmitting data packets from/towards another communication device over a wireless link;
   a2) quality values of the wireless link are determined for the M antennae thus connected;
b) at the end of the normal operating mode, to operate the device according to a test mode in which:
   b1) from said M antennae, m best antennae, which during the normal operating mode gave better quality values, are distinguished from M-m worst antennae, which during the normal operating mode gave worse quality values, in which 1 ≤ m ≤ M-1;
   b2) m of the M transceivers are connected to said m best antennae and the other M-m transceivers are connected to respective M-m test antennae, selected from said N antennae and at least in part different from the M-m worst antennae;
   b3) quality values of the wireless link are determined at least for the M-m test antennae;
c) at the end of the test operating mode, to identify the best antennae, in terms of link quality values, among the M-m test antennae and the M-m worst antennae identified in b1) and
d) to return to a) in which in a1) the M transceivers are connected to the m best antennae identified in b1) and to the M-m best antennae identified in c).

The device can be an access point or a station for a wireless local communication network.

According to one embodiment, which is particularly advantageous when the device is an access point, the device comprises a control unit which during the normal operating mode is configured so as to process acknowledgment data packets, on which the wireless link quality values are determined in a2) for the M antennae, for a time period which is shorter than the duration of time of the normal operating mode. In this embodiment, the control unit is configured so as to process acknowledgment data packets also during the test operating mode.

According to one embodiment, which is particularly advantageous when the device is an access point, the device comprises a control unit which is configured so as to process dummy data packets on which to determine the wireless link quality values in a2) and in b3).

As far as concern further features of the device of the invention, reference is made to what described above with reference to the first aspect of the invention.

In a third aspect thereof, the present invention relates to a wireless local communication network comprising at least one access point and at least one station, wherein said at least one station is a wireless communication device according to the second aspect of the invention.

Typically, the wireless local communication network comprises a plurality of stations, wherein each of said plurality of stations is a wireless communication device according to the second aspect of the invention.

Advantageously, also said at least one access point is a wireless communication device according to the second aspect of the invention.

As far as concern further features of the invention, reference is made to what described above with reference to the first and second aspect of the invention.

Further characteristics and advantages of the present invention will be clearer from the following detailed description of preferred embodiments thereof, made with reference to the enclosed drawings. In such drawings,
- Figure 1 schematically shows a wireless local communication network according to one embodiment of the invention;
- Figure 2 schematically shows a wireless communication device (access point or station) according to one embodiment of the invention;
- Figure 3 schematically shows a switching system with an antennae system according to a first embodiment of the invention;
- Figures 4a and 4b schematically show a switching system with an antennae system respectively according to a second and a third embodiment of the invention;
- Figure 5 schematically shows a practical implementation example of the embodiment of figure 4b;
- Figure 6 shows a flow diagram of a first embodiment of a switch selection control algorithm according to the invention;
- Figure 7 shows a part of a flow diagram of a second embodiment of a switch selection control algorithm according to the invention;
- Figure 8 shows experimental results obtained with a device according to the invention and a comparative device according to the prior art.

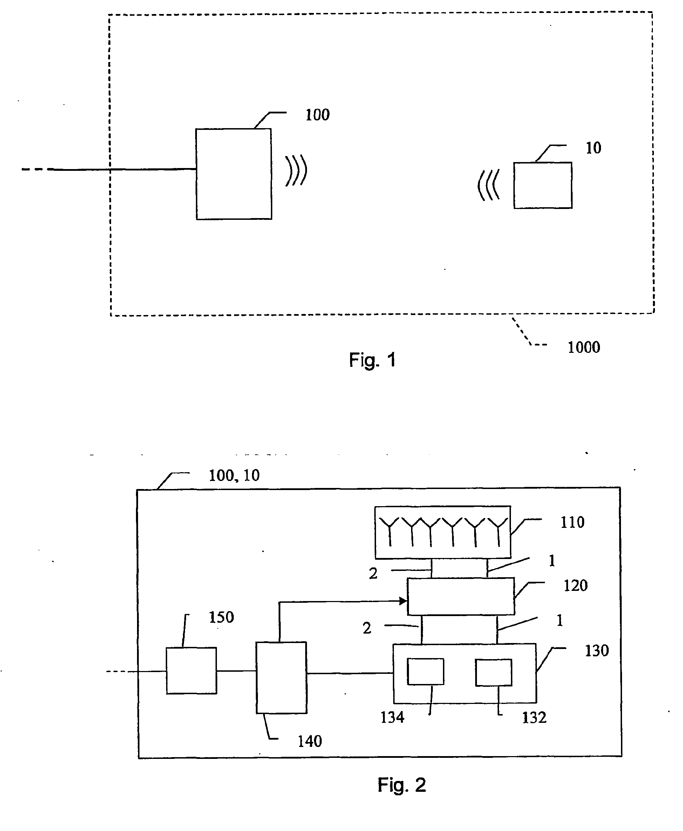

Figure 1 shows a wireless local communication network 1000 according to one embodiment of the invention which comprises an access point 100 and a station 10.

Typically, the network 1000 is a network of residential type and can be installed in environments such as houses, offices, halls, schools, railway stations, airports and the like.

The network 1000 is typically configured for providing users with services that can be used through the access to an external network, like IPTV video streaming, video conferencing, VoIP (Voice over Internet Protocol), Internet browsing and similar services.

The invention is particular advantageous in case of services which require a high throughput such as IPTV video streaming services, in particular those with high definition.

Typical high throughout values are values ≥5 Mbit/s. Preferably, ≥10 Mbit/s. For example, a high throughput value can be a value more or less equal to half the maximum bit rate ensured by the external network. For example, when the maximum bit rate ensured by the wireless local network 1000 is 54 Mbit/s and the maximum bit rate ensured by the external network, with access via modem ADSL, is 20 Mbit/s, a high throughput value can be represented by 10 Mbit/s.

The access point 100 and the station 10 are connected together by means of a wireless link and are configured for communicating with each other according to a communication protocol, for example that defined by the standard IEEE 802.11.

The access point 100 and the station 10 typically communicate with each other at operating frequencies typically on the order of GHz (e.g., according to the standard IEEE 802.11, such frequencies are comprised between 2-2.5 GHz or 5-6 GHz).

The access point 100 is typically connected to a wired external network (e.g. Internet). For example, the access point 100 can be connected to the external network by means of a XDSL modem or a router (not shown), in which the access point 100 can be integrated.

The access point 100 is adapted to transmit data packets coming from the external network to the station 10.

The station 10 is typically connected to a user device, such as a Personal Computer, a set-top-box (e.g. an IPTV decoder) and the like.

Typically, the station 10 is a separate entity with respect to the user device. Nevertheless, the station 10 can also be integrated into the user device.

As shown in figure 2, the-access point 100 and the station 10 each comprise an antennae system 110, a switching system 120, a reception/transmission system 130, a control unit 140 and a wired interface 150.

The control unit 140 typically comprises a CPU and memory devices adapted to store data and suitable control software.

The control unit 140, in general, is adapted to be process the data packets received by the reception/transmission system 130, to convert them into a format suitable for the external network, to which the access point 100 is connected (or suitable for the user device to which the station 10 is connected), and to send them to the wired interface 150 in order to send them to the external network (or to the user device). In addition, the control unit 140 is adapted to process the data packets received from the external network (or from the user device) through the wired interface 150, and convert them into a format suitable for the wireless communication within the local network 1000 and to send them to the reception/transmission system 130 in order to send them into the local network 1000. These processing types are carried out according to techniques well known in the art, so that they will not be described further in the present description.

The system of antennae 110 advantageously comprises a plurality of N antennae, with N > 2.

Preferably, the antennae are of directional type and have characteristics and position such to cover a 360° angle overall, substantially on a same plane.

The reception/transmission system 130 advantageously comprises M radio transceivers with M ≥ 2 and N > M. For the sake of description simplicity, in the embodiment illustrated in figure 2 and in the following description, only two radio transceivers 132, 134 and six antennae are considered.

The switching system 120 is adapted to connect the antennae to the two radio transceivers 132, 134 in a selectable manner, so as to form, for every selection, two reception/transmission paths 1, 2, displayed in figure 2. The signals received/transmitted over several reception/transmission paths can be advantageously processed according to MIMO (multiple-in and multiple-out) techniques, known in the art.

According to one characteristic of the invention, each antenna is connectable to at least one of the two radio transceivers 132, 134, but not to both simultaneously. The switching system 120 is configured so as to connect each of the two radio transceivers 132, 134 to a single antenna at a time, among said plurality of N antennae.

The number of combinations of antenna pairs connectable to the two transceivers 132, 134 depends on the specific switching system employed. For example, the number of possible combinations depends on the number, on the type and on the arrangement of the switches used for making the switching system 120.

Typically, the switching system 120 comprises two radio frequency connectors for the connection to the two radio transceivers 132, 134, a certain number of switches and a logical circuit for controlling the switches (not shown).

The switches preferably have at least one input and at least two outputs.

For example, the switches can be of the mixed type Single Pole Double Throw (SPDT), Double Pole Double Throw (DPDT) and/or Single Pole Triple Throw (SP3T).

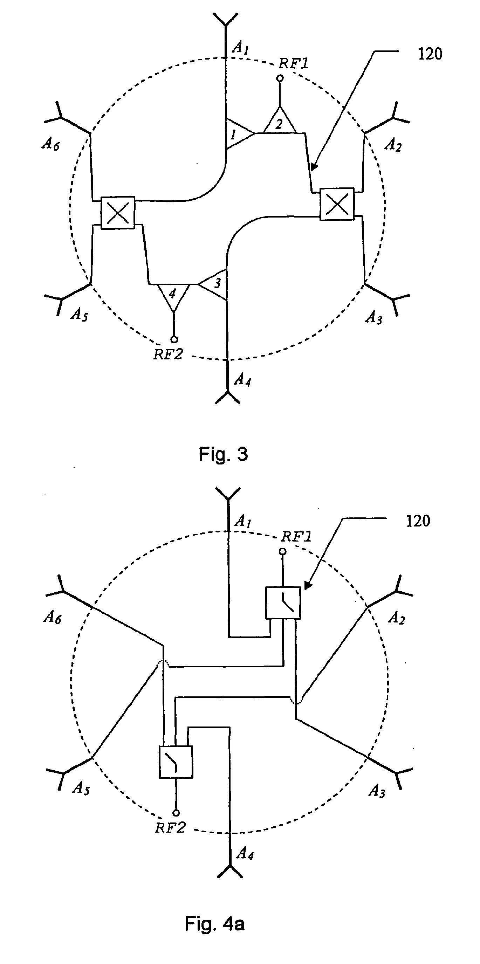

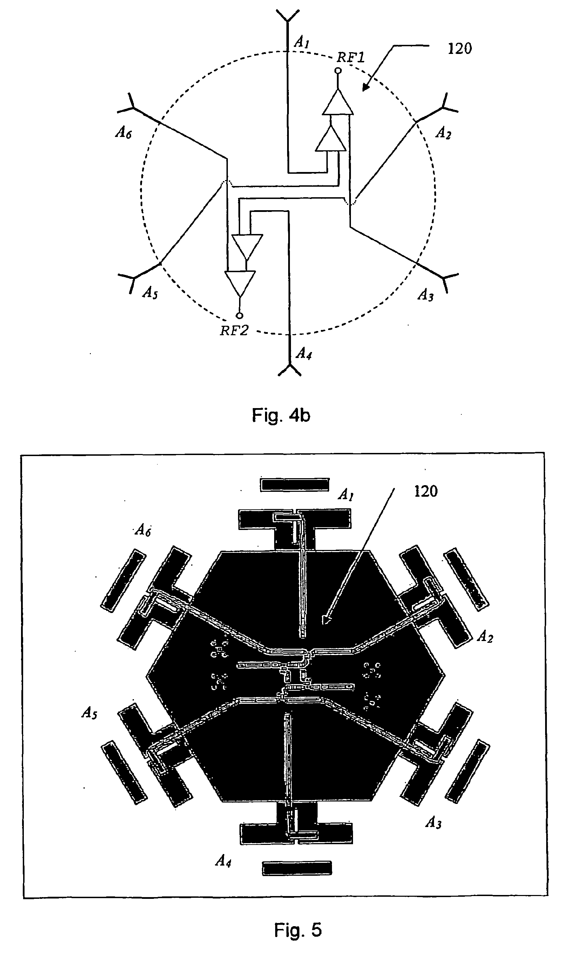

Figures 3, 4a and 4b schematically show a switching system 120 and an antennae system 110, respectively, according to a first, a second and a third embodiment of the invention.

In such embodiments, the antenna system 110 comprises 6 directional antennae A1, A2, A3, A4, A5, A6 arranged symmetrically so as to cover a 360° angle. For example, each antenna can have a radiation pattern with a 3dB beam width on the horizontal plane of about 75°.

In addition, the switching system 120 comprises two connectors RF1, RF2 for the connection to the two radio transceivers 132, 134 and a certain number of switches.

In particular, in the embodiment illustrated in figure 3, the switching system 120 comprises 6 radio frequency switches overall, of which 4 switches are of SPDT type (1 input, 2 outputs, shown in the figure as triangles) and 2 switches are of the DPDT type (2 inputs, 2 outputs, shown in the figure as squares). The scheme is suitable to operate with a WiFi chipset with two reception/transmission paths, such as the chipset model RT5600 or model RT2880 of the Ralink Technology corporation which respectively implement the standard IEEE 802.11a and IEEE 802.11n.

The switching system 120 of figure 3 is adapted to connect every possible pair of the 6 antennae A1, A2, A3, A4, A5, A6 to the two radio transceivers 132, 134 by means of the two connectors RF1 and RF2.

Table 1 shows the possible combinations (twenty-one) of antennae pairs which can be selectively connected to the two radio transceivers 132, 134 by means of the connectors RF1 and RF2. It is observed that each radio transceiver 132, 134 can be connected to one respective antenna at a time.

| | RF2 | | | | | | |
|---|---|---|---|---|---|---|---|
| RF1 | | A1 | A2 | A3 | A4 | A5 | A6 |
| | A1 | - | A1A2 | A1A3 | A1A4 | A1A5 | A1A6 |
| | A2 | - | - | A2A3 | A2A4 | A2A5 | A2A6 |
| | A3 | - | A3A2 | - | A3A4 | A3A5 | A3A6 |
| | A4 | - | - | - | - | - | - |
| | A5 | - | A5A2 | A5A3 | A5A4 | - | A5A6 |
| | A6 | - | A6A2 | A6A3 | A6A4 | A6A5 | - |

In the two embodiments illustrated in figures 4a and 4b, the switching system 120 comprises 2 radio frequency switches of SP3T type (1 input, 3 outputs, shown in the figure as squares) or 4 radio frequency switches of SPDT type (1 input, 2 outputs, shown in the figure as triangles). These switching schemes, being simpler than the scheme of figure 3, have the advantage of reducing the insertion losses, but the disadvantage of reducing (from twenty to nine) the number of possible combinations of antenna pairs, which can be selectively connected to the two radio transceivers 132, 134.

Such combinations are shown in table 2. It is observed that each radio transceiver 132, 134 can be connected to one respective antenna at a time.

| | RF2 | | | | | | |
|---|---|---|---|---|---|---|---|
| RF1 | | A1 | A2 | A3 | A4 | A5 | A6 |
| | A1 | - | A1A2 | - | A1A4 | - | A1A6 |
| | A2 | - | - | - | - | - | - |
| | A3 | - | A3A2 | - | A3A4 | - | A3A6 |
| | A4 | - | - | - | - | - | - |
| | A5 | - | A5A2 | - | A5A4 | - | A5A6 |
| | A6 | - | - | - | - | - | - |

According to a preferred embodiment of the invention, the antenna system 110 and the switching system 120 are made in a single printed circuit board (PCB).

Figure 5 shows an example of a PCB integrating the embodiment of figure 4b. The 6 antennae A1, A2, A3, A4, A5, A6 project from the six sides of a hexagon made on a metal inner plane of the PCB and are λ/4 dipoles with an additional frontal element that acts as a directional element for further increasing the maximum gain of the antenna. λ represents the wavelength corresponding to the operating frequency which in the illustrated embodiment is comprised in the band between 5-6 GHz. The switching system, comprising discrete switches, is made in the upper layer of the PCB. The lower layer of the PCB instead comprises other components which form the control logic of the switching system.

Advantageously, the PCB of figure 5 can be mechanically integrated in a WiFi extender so as to allow an aesthetic improvement of the product with respect to known WiFi extenders provided with external dipole antennae which project outward from the device.

The access point 100 and the station 10 can have similar structure (same number of antennae, same number of transceivers and, possibly, also the same type of switches and the same number of available antennae combinations) or different structure.

The access point 100 and the station 10 of the network 1000 each comprise hardware and software modules adapted to implement the invention in the various aspects thereof.

In particular, according to one embodiment of the invention, such modules are advantageously adapted to execute at least three parallel sub-processes (threads): a reception thread, a transmission thread and a switch selection control thread.

The transmission thread is executed each time the device (access point 100 or station 10) must transmit a data packet to another device. It is adapted to process the data packets being transmitted from each transceiver 132, 134 according to well known conventional techniques (e.g. according to the abovementioned standard 802.11).

The reception thread is executed each time the device (access point 100 or station 10) receives a data packet from another device. It is adapted to process the data packets received by each transceiver 132, 134 according to conventional techniques well known in the art (e.g. according to the abovementioned standard 802.11). In addition, according to the invention, for each received data packet, the reception thread is advantageously adapted to evaluate the link quality separately for each receiving and transmitting path 1, 2 (i.e., for each transceiver 132, 134).

According to a preferred embodiment of the invention, the base indicator used for estimating the link quality is a parameter known in the art as Received Signal Strength Indication (RSSI). The use of this parameter is advantageous because the base software of the wireless receiving and transmitting systems currently available on the market are typically already equipped with a RSSI measurement function.

The RSSI value acquired for each arriving packet is tied to the power of the received electromagnetic signal.

The RSSI value is separately evaluated for each transceiver 132, 134.

assuming that the receiving and transmitting channel is reciprocal, the antennae with the best reception quality also ensure the best transmission quality. During the present description, the reception quality values are therefore deemed to be indicative of the link quality in general (both in reception and in transmission).

Starting from the RSSI, the link quality can be evaluated: on the basis of the simple RSSI value; on the basis of an average of the RSSI values obtained for several successive packets; on the basis of the power of the received signal, which can be estimated by means of the RSSI value; on the basis of the average of the power obtained for several successive packets; or on the basis of a more generic function of the RSSI and/or power values.

The evaluation of the link quality is advantageously carried out without interrupting the normal flow of data packets received and transmitted by the device. This allows optimizing the throughput and minimizing the application overhead.

When the device is a station 10, considering that the normal data flow is typically directed from the access point 100 towards the station 10, the device is advantageously adapted to evaluate the quality of the connection on the basis of the RSSI measured on each received data packet, coming from the access point 100.

When the device is an access point 100, on the other hand, the flow of data packets from the station 10 towards the access point 100 may not be guaranteed. In particular, the data traffic towards the access point may be absent, sporadic or in any case non constant over time.

Therefore, with regard to the evaluation of the link quality at the access point 100, different cases can be foreseen:
1) the case in which the transmission protocol provides for sending acknowledgment (ACK) packets for each received data packet, so that the access points receives an ACK packet for each data packet received by the station 10 connected thereto, and
2) the case in which the transmission protocol does not provide for sending acknowledgment (ACK) packets.

In the first case, it is observed that - even if all the wireless reception systems currently available on the market are provided with base software adapted to calculate the RSSI value on any received signal, and hence also on the ACK packets - two different situations can be provided for: 1a) the situation in which the access point is configured for the processing of ACK packets and the related RSSI by the control unit 140 of the access point; and 1b) the situation in which the access point is configured such that it does not provide for the processing of such packets and the related RSSI by the control unit 140 of the access point (this in order to save computation resources and improve the device performances).

In case 1a), the control unit 140 of the access point is already adapted to carry out the evaluation of the reception quality based on the RSSI values measured on the received ACK packets.

In the case 1b), instead, the control unit 140 could be configured so as to be enabled to process the ACK packets and the related RSSI so as to allow the evaluation of the link quality on the basis of the RSSI values measured on the received ACK packets. Nevertheless, considering the great quantity of ACK typically received (one for each transmitted packet), this solution could overload the control unit 140.

In both cases, in order to avoid to overload the control unit 140, the control unit 140 can be advantageously configured to be enabled to process the ACK packets and the related RSSI only for brief periods of time during which the evaluation of the reception quality will be carried out on the basis of the RSSI values measured for the ACK packets received in those periods of time.

Another embodiment of the invention, which could be implemented in particular in the abovementioned cases 1b) and 2), provides for sending dummy data packets from the station 10 to the access point 100, so as to ensure a minimal data packet flow which allows the access point 100 to estimate the link quality with that station 10. The sending of dummy packets can be carried out periodically or according to predetermined criteria (e.g., only in case of absence of data packets transmission for a certain predetermined time period).

With respect to the preceding embodiment, this embodiment involves a small reduction of the useful band for data transmission.

Even if these embodiments related to the evaluation of the link quality have been described only with reference to the access point 100, if necessary, they can also be used for carrying out the evaluation of the quality at the station 10.

The switch selection control thread is periodically executed by the device (access point 100 or station 10) and it has the task of periodically evaluating which antenna combination, among the possible antenna combinations to be connected to the transceivers, allows optimizing the wireless link quality between the device and another device.

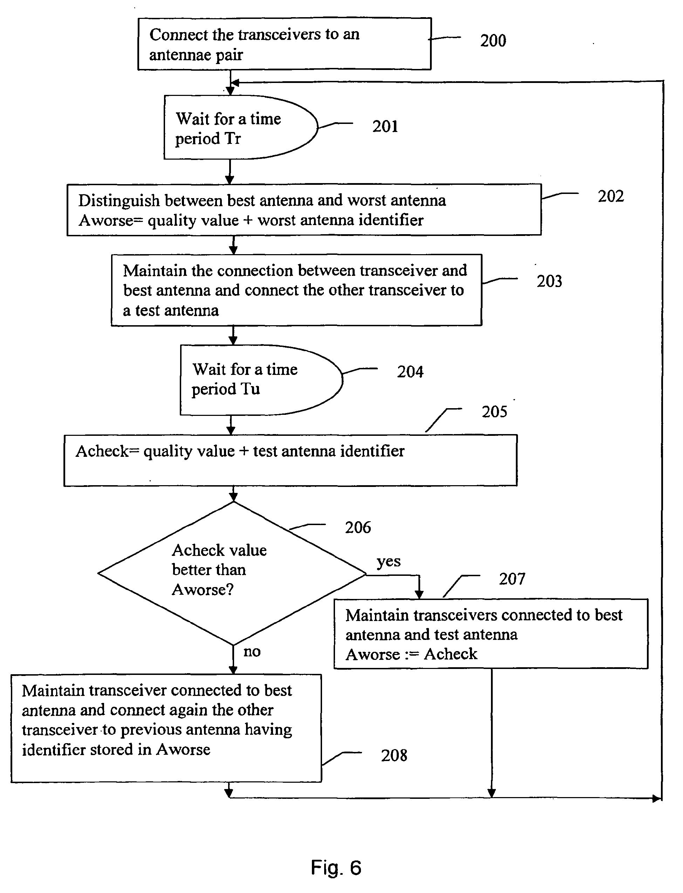

Figure 6 shows the flow diagram of an embodiment of a switch selection control algorithm which can be executed in the case of a device (access point 100 or station 10) equipped with two transceivers 132, 134 and access point 100 connected to only one station 10 or a station 10 connected to only one access point 100.

According to the flow diagram of figure 6, at block 200 the switch selection control thread controls the switching system 120 so that the two transceivers 132, 134 are connected to a pair of antennae (e.g. A1, A2), among the possible combinations (e.g., those indicated in Tables 1 or 2). The antenna pair can be selected randomly or according to a predetermined criterion.

At the block 201, the switch selection control thread remains in standby for a time Tr. During this time period (normal operating mode of the device) the normal reception/transmission of data packets occurs, which is executed by means of the reception and transmission threads which are executed in parallel, independently from the switch selection control thread. For each received data packet, the reception thread is advantageously adapted to determine quality values of the wireless link for the first and the second receiving and transmitting path 1, 2.

The value of Tr determines the minimum reaction time of the device to possible variations in the quality of the received signal. A low value can be necessary for environments that quickly change their propagation characteristics, while a high value of Tr ensures greater stability and lower application overhead. Advantageously, Tr is therefore set on the basis of typical variation times of the surrounding environment. Tr can last, for example, between 200 and 5000 milliseconds.

Tr can have a predetermined fixed value or it can be changed as the operating conditions change.

Upon the expiration of the time Tr, at block 202, the switch selection control thread is adapted to identify the receiving and transmitting path (and thus the antenna) which is providing the best link quality and that which is providing the worst quality. For example, in the illustrated embodiment, at the expiry of the time Tr, the switch selection control thread is adapted to identify the best antenna and the worst antenna on the basis of the last link quality evaluation carried out by the reception thread for the pair of antennae (e.g. A1, A2) selected at the block 200. The worst value is stored in an Aworse variable (e.g. that obtained with the antenna A2). Advantageously, in the variable Aworse, also the identifier (e.g. A2) of the antenna which gave the stored value, is stored.

At the block 203, the switch selection control thread maintains the connection between the transceiver and the antenna which ensured the best value (e.g. transceiver 132 and antenna A1) and connects the other transceiver with a test antenna (e.g. A4), different from the first two antennae, disconnecting the second antenna (A2). The choice of the test antenna is preferably made on rotation, according to a predetermined list so that all the antennae are in turn connected.

At this point, at the block 204, the switch selection control thread remains in standby for a time Tu less than Tr. During this time period (test operating mode of the device), the normal reception/transmission of data packets occurs, which is executed by means of the reception and transmission threads which are executed in parallel to the switch selection control thread. In addition, values indicative of the quality for the first and the second receiving and transmitting path 1, 2 are continuously evaluated for each received data packet, by the reception thread.

The time Tu is the time period used for evaluating the receiving and transmitting quality with the test antenna. The time Tu is preferably much less than Tr. Indeed, the test antenna could have an unsatisfactory quality. At the same time, the time Tu is preferably sufficiently long for permitting the reception of data packets for the evaluation of the reception quality. Advantageously, Tu is greater than the time necessary, according to the employed transmission protocol, for transmitting a data packet, i.e. Tu ≥ (maximum length of a data packet, expressed in number of bits)/(transmission bit rate).

The time period Tu can for example be comprised between 1/100 and 1/3 of Tr, preferably between 1/20 and 1/5 of Tr. For example, Tu can be 1/10 of Tr.

Tu can have a predetermined fixed value or it can be changed as the operating conditions change.

Upon expiration of the time Tu, at the block 205, the switch control thread is adapted to store, in a variable Acheck, the link quality value based on the last quality evaluation carried out by the reception thread for the test antenna. Advantageously, in the Acheck variable, also the identifier of the antenna, which gave the stored value, is stored.

At block 206, the switch control thread compares the value stored at the block 202 in the Aworse variable with the value stored at the block 205 in the Acheck variable. The objective is to select, between the two antennae (A2 and A4), that which ensures the best link quality.

If the value stored in Acheck is better than that stored in Aworse, then the first antenna and the test antenna (A1, A4) remain connected to the two transceivers 132, 134 (block 207). In addition, at the block 207, in the variable Aworse the data momentarily stored in the variable Acheck can be stored.

If, instead, the value stored in Acheck is not better than that stored in Aworse, the first antenna and the second antenna are connected to the transceivers (A1, A2).

In any case, the procedure then resumes at the block 201.

It is observed that in this just-described case of access point 100 connected to only one station 10 (or station 10 connected to only one access point 100) and of reciprocal transmission channel, it is not necessary that before transmitting or receiving a data packet, the transmission or reception thread checks which is the antenna combination that ensures the best link quality between the access point 100 and the specific station 10. Such check is indeed periodically executed in parallel by the switch selection control thread.

It is also observed that the invention also comprises the variant (not shown) in which at the block 201, the switch selection control thread remains in standby until the device receives a predetermined number P of data packets. Similarly, the invention also comprises the variant (not shown) in which at the block 206, the switch selection control thread remains in standby until the device receives a predetermined number R of data packets, with R smaller than P and, preferably, much smaller than P.

Preferably, at blocks 201 and 206, the switch selection control thread remains in standby until a first of two conditions is verified: reception of P/R data packets and expiration of the times Tr/Tu.

For example, R can be comprised between 1 and 100.

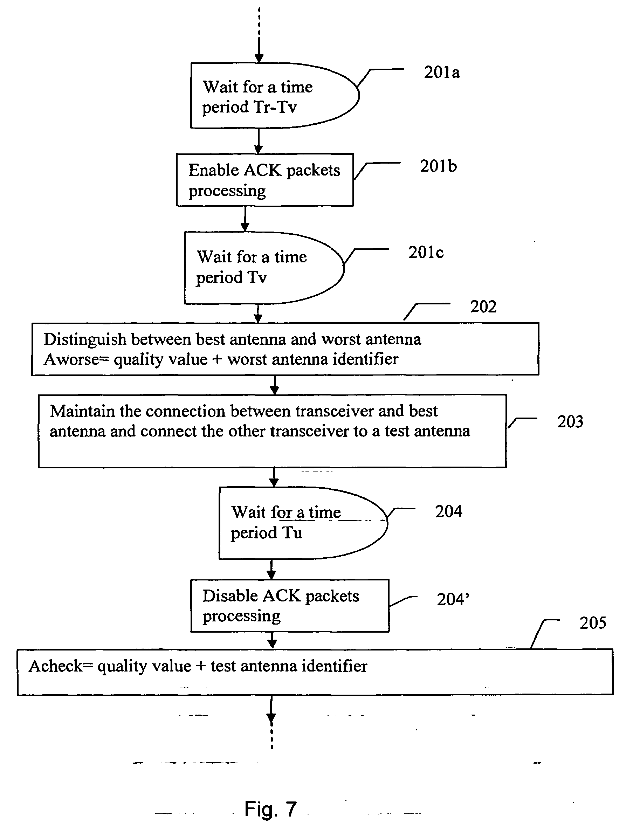

Figure 7 shows a part of a flow diagram of a switch selection control thread which can be executed in the abovementioned case 1b), which provides that the evaluation of the link quality by an access point 100 is carried out over ACK packets received only for brief pre-established time periods.

The flow diagram of figure 7 is entirely similar to that of figure 6 except that the block 201 of figure 6 is substituted by the blocks 201a, 201b and 201c and in that it comprises, between the block 204 and the block 205, the block 204'. For the sake of simplicity, the blocks 200, 206-208 of figure 6 are not shown in figure 7. In particular:
- at the block 201a, the switch selection control thread remains in standby for a time period Tr-Tv, with Tv<Tr (preferably Tv<<Tr), and possibly Tv=Tu, where Tv is the time allocated to ACK processing during the normal operating mode of the device;
- once the time period Tr-Tv has elapsed, at block 201b the switch selection control thread enables the control unit 140 to process the ACK packets and the related RSSI, after which at block 201c the switch selection control thread once again remains in standby for a time period Tv; and
- at the block 204', the control unit 140 is disabled for processing ACK packets and the related RSSI.

Even if not illustrated, it should be noted that the invention also comprises the general case of a device (access point 100 or station 10) with M transceivers, with M>2, and N antennae, with N>M.

In such case, the selection of which and how many antennae have to be tested during the abovementioned test time period Tu and of which antennae have to be maintained connected to the respective transceiver, can be carried out according to different criteria. Generally, a preferred selection criterion provides that the antennae which, in the immediately preceding time period Tr, resulted to be the best antennae are maintained connected to the respective transceiver, while the antennae which gave the worst results are disconnected, in order to connect the respective transceivers to test antennae.

For example, it can be provided to:
maintain connected the best M-1 antennae and to disconnect the M-th antenna from the respective transceiver in order to connect it to a test antenna, different from the M antennae used in the immediately preceding time period Tr. This solution ensures good link stability, but relative slowness in adapting to variations of the propagation characteristics of the transmission channel;
maintain connected only the best antenna and to disconnect the other M-1 antennae from the respective transceivers in order to connect them to M-1 test antennae, at least in part different from the M antennae used in the immediately preceding time period Tr. This solution ensures quick adaptation to changes of the propagation characteristics of the transmission channel, with a reduced link quality stability and an increased computational load;
in the case of M>3, maintain connected the m best antennae, with 1<m<M-1, and to disconnect the other M-m antennae from the respective transceivers in order to connect them to M-m test antennae, at least in part different from the M antennae used in the immediately preceding time period Tr. This solution can represent a good compromise between the two preceding solutions.

It is also observed that even if up to now the case of network with only one access point 100 and only one station 10 has been described, the present invention applies also to the case of network with one access point 100 and a plurality of stations 10.

In this more general case, the stations 10 will only have to communicate with the access point 100 and will each comprise hardware and software means adapted to implement the invention according to that described above.

With regard to the access point 100, on the other hand, which has to manage the communication with several stations 10, two situations can be distinguished: a first situation in which the used communication protocol does not allow the access point 100, in case of reception, to know in advance, before receiving a data packet, from which station the data packet will be received, but only to know that it is about to receive a data packet; and a second situation in which the used communication protocol allows the access point 100 to know in advance the station from which the data packet will be received.

In the first situation, the access point 100 can be of known type (e.g. provided with one or more omnidirectional antennae connected in a fixed, non-switchable manner to respective transceivers of the access point). Alternatively, according to another preferred embodiment, the access point 100 can comprise N antennae of which n (with 1 ≤ n <N) of omnidirectional type and N-n of the directional type described above and M transceivers with N>M>1. In this embodiment, the reception thread will be adapted, immediately before receiving a data packet, to connect n of the M transceivers to the n omnidirectional antennae and the other M-n transceivers to respective M-n directional antennae selected according to predetermined criteria (e.g., at random, on rotation, the latest best and the like). When the selection criterion provides for selecting the latest best directional antennae, a mechanism can be foreseen that is adapted to establish, on the basis of the latest received data packets, the most probable station from which the access point 100 will receive the data packet. Then, as far as regards the selection of the M-n directional antennae, the reception thread can act as described below with reference to the second situation, depending from the fact that the device operates according to a normal mode or a test mode. The transmission thread will also be adapted, before transmitting a data packet to a specific station 10x, to connect the M transceivers to the best combination of directional antennae (e.g. A1, A2) for the specific station 10x, based on the data previously stored by the reception thread.

In the second situation, instead, in which the used communication protocol allows the access point 100 to know in advance, before receiving a data packet, which is the station from which the data packet will be received, the access point 100 will have a similar structure to that shown in figures 2-5 and hardware and software modules adapted to keep a set of variables (e.g., Abestx, Aworsex, Acheckx) for every station 10 associated therewith and, while receiving from a specific station, to update the set of variables corresponding with such station. In particular, the hardware and software modules will be adapted to alternately operate the device according to a normal mode and a test mode, with duration of time Tr and Tu, respectively (and/or corresponding to the reception of P or R data packets, as described above). In case of reception of a data packet from a station 10x, the hardware and software modules will be adapted to verify, before receiving the data packet, if the device is operating in the normal or test mode.

In case of normal mode, the hardware and software modules are adapted to connect the two transceivers 132, 134 to the best antenna pair (e.g. A1, A2) for the specific station 10x, based on data previously stored in a set of variables (e.g., Abestx, Aworsex) corresponding to such station 10x. In the absence of such data, the pair of antennae can be selected in a random manner or according to other pre-established criteria. Upon reception of the data packets, the hardware and software modules are adapted to determine link quality values for such antenna pair and to update the set of variables (e.g., Abestx, Aworsex) corresponding to such station 10x with such values. In the variable Abestx, the best of the two values is stored (e.g. that obtained with the antenna A1) while in the variable Aworsex, the other value is stored (e.g. that obtained with the antenna A2). Advantageously, in the variables Abestx and Aworsex, also the identifiers are stored (e.g. A1 and A2, respectively) of the two antennae which gave such values.

In case of test mode, the hardware and software modules are adapted to connect, to one of the two transceivers 132, 134, the best antenna (e.g. A1) identified by the variable Abestx and to connect the other transceiver to a test antenna (e.g. A4). The choice of the test antenna is preferably made on rotation, according to a predetermined list associated with the station 10x such that all the antennae will in turn be connected. Upon reception of the data packet, the hardware and software modules are adapted to determine and store in the Abestx variable and in a variable Acheckx, associated with the station 10x, link quality values for the antenna pair. Advantageously, in the variables Abestx and Acheckx, also the identifiers are stored (e.g. A1 and A4, respectively) of the two antennae which gave such values.

At the end of the functioning of the access point 100 according to the test mode, the hardware and software modules are also adapted, for each station 10x associated with the access point 100, to compare the value stored in the variable Aworsex with the value stored in the variable Acheckx. If the value stored in Acheckx is better than that stored in Aworsex, then the variable Aworsex takes the value of the variable Acheckx. If, instead, the value stored in Acheckx is worse than that stored in Aworsex, then Aworsex maintains its current value.

In turn, for each data packet to be transmitted to a station 10x, the hardware and software modules of the access point 100 are adapted, before sending each packet, to connect the two transceivers 132, 134 to the two best antennae (e.g. A1, A2) for the specific station 10x, based on the data currently stored in the variables Abestx, Aworsex corresponding to such station 10x.

Of course, even if the second situation was described only with reference to the case of two receiving and transmitting paths, the same considerations also apply to the general case of M receiving and transmitting paths.

The same considerations made above in the case of access point 100 associated with several stations 10 also apply to the possible case of station 10 connected to more than one access point 100.

From that described above, it will be clear that the invention allows improving the coverage for services which require high throughput by means of an algorithm which, with respect to the described solutions of the prior art, requires a low application overhead, both in computational terms and in terms of transmission of additional communications.

Indeed, considering that each transceiver can be connected to a single antenna at a time and that -during the exploratory periods fo time Tu in which at least one of the transceivers is connected to a test antenna - the other transceivers are in any case connected to the antennae which offer the best link quality, the invention allows always ensuring a minimum link quality (equal to that ensured by such best antennae), even during the exploratory steps in which the test antennae could have very poor quality.

Thanks to this, the exploratory steps (in which only part of the transceivers is connected to the test antenna(e)) can be carried out during the normal reception and transmission of the device. This eliminates the need to interrupt the normal data traffic during the test operating mode of the device.

In addition, with respect to the known solutions which require, for each station associated with an access point, the creation, use and particularly continuous updating of a table which contains data relative to the link quality for all or most of the possible antennae configurations, the invention requires the management of a reduced number of resources.

Furthermore, thanks to the invention, a device, at the transmission of a data packet towards another of a plurality of devices, must only connect the transceivers to the combination of antennae which gave the best results during the last exploratory step carried out by such device. This is advantageous with respect to the known solutions which instead require carrying out, at the time of transmission of a data packet towards another device, a series of comparison operations in order to evaluate in the aforesaid table which of the possible antenna configurations offers best link quality values for communicating with such device.

The invention, in the various aspects thereof, thus allows improving the coverage for services which require high throughput also in the case of transmission channels with very dynamic propagation characteristics, using minimal resources (CPU and memory).

This is particular advantageous in applications, such as domestic applications, in which the cost is a very important parameter since it allows using low cost chipsets and hence allows providing the aforesaid services at reduced costs.

Finally, it is observed that the fact that each receiving and transmitting path can be connected to only one antenna at a time, allows ensuring that the reception paths have at their output always the same impedance of the RF wireless link, regardless of the used antenna combination. This has the advantage of avoiding problems of impedance adaptation and possible RF reflection losses.

In order to evaluate the performances obtainable with the invention, the Applicant has carried out experimental tests by using a system comprising an access point and a station according to the invention and a comparative system comprising an access point and a station according to the prior art.

The access point and the station according to the invention each comprised an antenna system and a switching system that had a scheme of the type shown in figure 3 and they were made of a PCB of the type shown in figure 5.

The access point and the station according to the prior art each comprised two receiving and transmitting paths connected in a stationary manner, non switchable, to two external dipole antennae of the omnidirectional type.

In the case of the system of the invention, the tests were conducted with times Tr variable between 250 and 400 ms and times Tu variable between 25 and 50 ms.

For both systems, the WiFi chipset of the model RT5600, mentioned above, and the communication protocol according to the standard IEEE 802.11a, with a working frequency between 5 and 6 GHz, were used.

The electromagnetic power irradiated from each antenna in the direction of the maximum of the pattern was set equal for the two systems, within the limits provided by the ETSI regulations.

For both systems, a constant data flow from the access point to the station was also considered.

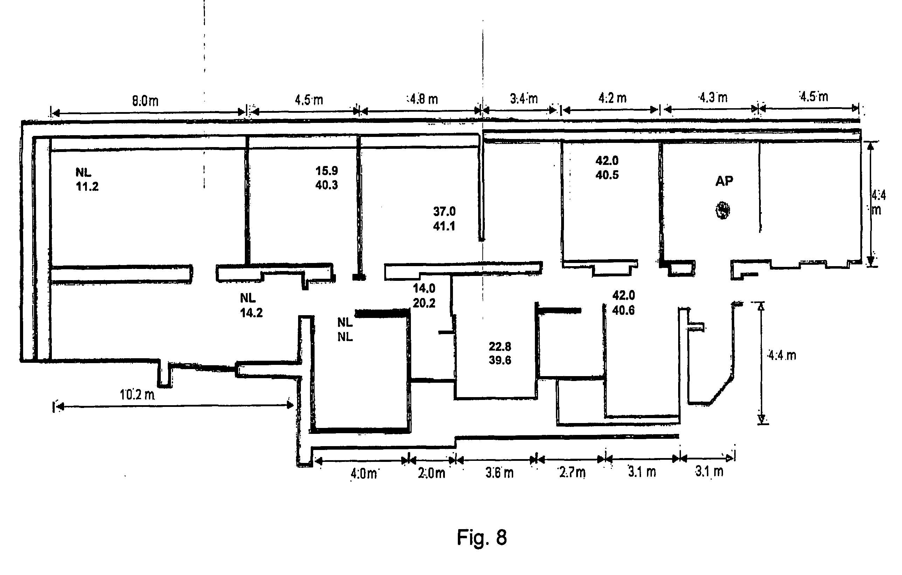

As shown in figure 8, the tests were made in a residential environment, placing the access point and the station at a distance variable between few meters and tens of meters, generally with obstacles (walls, doors and the like) placed between them.

In particular, in figure 8: AP indicates the position of the access point; NL (No Link) indicates that in those positions it was not possible to connect the access point and the station, and hence to transmit data; a pair of numbers generally represents the result of the throughput measurement (expressed in Mbit/s) made at that point. The upper-position number indicates the throughput obtained with the comparative system, while the lower-position number indicates the throughput obtained with the system according to the invention.

It is observed that, in the points in which the station and access point were close (4-5 meters distance) and, therefore, under the same signal quality, the maximum throughput obtained with the system according to the invention resulted lower than that obtained with the comparative system. This was due to the application overhead introduced by the switch selection control algorithm according to the invention, which was measured to be equal to 3.5%. At increasing distances, instead, where - thanks to the switch selection control algorithm- the system according to the invention gave better signal quality, the maximum throughput obtained with the system according to the invention resulted better than that obtained with the comparative system.

Overall, the coverage at 10 Mbit/s, i.e. the area in which it was possible to transmit useful data at throughputs greater than or equal to 10 Mbit/s, resulted greater with the system according to the invention.

## Claims

1. Method for receiving and transmitting data packets in a wireless communication device (10, 100), said device (10, 100) comprising M transceivers (132, 134), with M≥2, N antennae (A1-A6), with N>M, each connectable to at least one of the M transceivers (132, 134), and a switching system (120) adapted to connect each of said M transceivers (132, 134) to only one of said N antennae (A1-A6) at a time, the method comprising:
a) operating the device (10, 100) according to a normal mode (200) in which:
a1) the M transceivers (132, 134) are connected to M of said N antennae (A1-A6) so as to form M paths (1, 2) for receiving and transmitting data packets from/towards another communication device (10, 100) over a wireless link;
a2) quality values of the wireless link are determined for the M antennae (A1-A6) thus connected;
b) at the end of the normal operating mode (201), operating the device (10, 100) according to a test mode in which best antennae (A1-A6) are identified,
b1) from said M antennae (A1-A6), m best antennae (A1-A6), which during the normal operating mode gave better quality values, are distinguished (202) from M-m worst antennae (A1-A6), which during the normal operating mode gave worse quality values, in which 1 < m < M-1;
**characterized by** :
b2) m of the M transceivers (132, 134) are connected to said m best antennae (A1-A6) and the other M-m transceivers (132, 134) are connected to respective M-m test antennae (A1-A6), selected from said N antennae (A1-A6) and at least in part different from the M-m worst antennae (A1-A6) (203);
b3) quality values of the wireless link are determined at least for the M-m test antennae (A1-A6) (205);
c) at the end of the test operating mode, identifying the best antennae (A1-A6), in terms of link quality values, among the M-m test antennae (A1-A6) and the M-m worst antennae (A1-A6) identified in b1) (206);
d) resuming execution of the method starting from a) in which in al) the M transceivers (132, 134) are connected to the m best antennae (A1-A6) identified in b1) and to the M-m best antennae (A1-A6) identified in c).

2. Method according to claim 1, wherein the N antennae (A1-A6) are of the directional type in a determined reference plane.

3. Method according to claim 1 or 2, wherein the normal operating mode has a determined duration of time (Tr) that is greater than a determined duration of time of the test operating mode (Tu).

4. Method according to any one of claims 1 to 3, wherein in a2) at least part of the quality values of the wireless link for the M antennae (A1-A6) is determined based on acknowledgement data packets, which are processed for a time period that is shorter than the duration of time of the normal operating mode.

5. Method according to any one of claims 1 to 3, wherein in a2) and in b3) at least part of the quality values of the wireless link is determined based on dummy data packets.

6. Wireless communication device (10, 100) comprising M transceivers (132, 134), with M≥2; N antennae (A1-A6), with N>M, each connectable to at least one of the M transceivers (132, 134); a switching system (120) adapted to connect each of said M transceivers (132, 134) to only one of said N antennae (A1-A6) at a time; and modules adapted:
a) to operate the device (10, 100) according to a normal mode in which: al) the M transceivers (132, 134) connect to M of said N antennae (A1-A6) so as to form M paths (1, 2) for receiving and transmitting data packets from/towards another communication device (10, 100) over a wireless link;
a2) quality values of the wireless link are determined for the M antennae (A1-A6) thus connected;
b) at the end of the normal operating mode, to operate the device (10, 100) according to a test mode to identify the best antennae (A1-A6) :
b1) from said M antennae (A1-A6), m best antennae (A1-A6), which during the normal operating mode gave better quality values, are distinguished from M-m worst antennae (A1-A6), which during the normal operating mode gave worse quality values, in which 1 < m < M-1;
**characterized by** :
b2) m of the M transceivers (132, 134) are connected to said m best antennae (A1-A6) and the other M-m transceivers (132, 134) are connected to respective M-m test antennae (A1-A6), selected from said N antennae (A1-A6) and at least in part different from the M-m worst antennae (A1-A6);
b3) quality values of the wireless link are determined at least for the M-m test antennae (A1-A6);
c) at the end of the test operating mode, to identify the best antennae (A1-A6), in terms of link quality values, among the M-m test antennae (A1-A6) and the M-m worst antennae (A1-A6) identified in b1) ; and
d) to return to a) in which in al) the M transceivers (132, 134) are connected to the m best antennae (A1-A6) identified in b1) and to the M-m best antennae (A1-A6) identified in c).

7. Device according to claim 6, wherein the device is an access point (100) or a station (10) for a wireless local communication network.

8. Wireless local communication network comprising at least one access point (100) and at least one station (10), wherein said at least one station (10) is a wireless communication device according to claim 6.

9. Wireless local communication network according to claim 8, comprising a plurality of stations (10), wherein each of said plurality of stations (10) is a wireless communication device according to claim 6.

10. Wireless local communication network according to claim 8, wherein said at least one access point (100) is a wireless communication device according to claim 6.

## Patentansprüche

1. Verfahren zum Empfangen und Senden von Datenpaketen in einer drahtlosen Kommunikationsvorrichtung (10, 100), wobei die Vorrichtung (10, 100) M Transceiver (132, 134), mit M≥2, N Antennen (A1-A6), mit N>M, deren jede mit zumindest einem der M Transceiver (132, 134) verbindbar ist, sowie ein Schaltsystem (120), das dazu ausgelegt ist, jeden der M Transceiver (132, 134) mit nur einer der N Antennen (A1-A6) auf einmal zu verbinden, umfasst, wobei das Verfahren umfasst:
a) Betreiben der Vorrichtung (10, 100) gemäß einem Normalmodus (200), worin:
a1) die M Transceiver (132, 134) mit M der N Antennen (A1-A6) verbunden werden, um M Wege (1, 2) zu bilden, um Datenpakete von/zu einer anderen Kommunikationsvorrichtung (10, 100) über einen drahtlosen Link zu empfangen und zu senden;
a2) Qualitätswerte des drahtlosen Links für die so verbundenen M Antennen (A1-A6) bestimmt werden; und
b) am Ende des normalen Betriebsmodus (201), Betreiben der Vorrichtung (10, 100) gemäß einem Testmodus, in dem die besten Antennen (A1-A6) identifiziert werden,
b1) von den M Antennen (A1-A6), m beste Antennen (A1-A6), die während des normalen Betriebsmodus bessere Qualitätswerte ergaben, von M-m schlechtesten Antennen (A1-A6), die während des normalen Betriebsmodus schlechtere Qualitätswerte ergaben, unterschieden werden (202), worin 1 < m < M-1;
**gekennzeichnet durch**:
b2) m von M Transceivern (132, 134) mit den m besten Antennen (A1-A6) verbunden werden und die anderen M-m Transceiver (132, 134) mit jeweiligen M-m Testantennen, die aus den N Antennen (A1-A6) ausgewählt sind und zumindest teilweise von den M-m schlechtesten Antennen (A1-A6) unterschiedlich sind, verbunden werden (203);
b3) Qualitätswerte des drahtlosen Links zumindest für die M-m Testantennen (A1-A6) bestimmt werden (205);
c) am Ende des Testbetriebsmodus, Identifizieren der besten Antennen (A1-A6) im Hinblick auf Linkqualitätswerte unter den M-m Testantennen (A1-A6) und den in b1) identifizierten M-m schlechtesten Antennen (A1-A6) (206);
d) Wiederaufnehmen der Ausführung des Verfahrens beginnend von a), worin in a1) die M Transceiver (132, 134) mit den in b1) identifizierten m besten Antennen (A1-A6) und mit den in c) identifizierten M-m besten Antennen (A1-A6) verbunden werden.

2. Verfahren nach Anspruch 1, worin die N Antennen (A1-A6) vom Richtungstyp in einer vorbestimmten Referenzebene sind.

3. Verfahren nach Anspruch 1 oder 2, worin der normale Betriebsmodus eine bestimmte Zeitdauer (Tr) hat, die länger ist als eine bestimmte Zeitdauer des Testbetriebsmodus (Tu).

4. Verfahren nach einem der Ansprüche 1 bis 3, worin in a2) zumindest ein Teil der Qualitätswerte des drahtlosen Links für die M Antennen (A1-A6) basierend auf Anerkennungsdatenpaketen bestimmt wird, die für eine Zeitdauer bearbeitet werden, die kürzer ist als die Zeitdauer des normalen Betriebsmodus.

5. Verfahren nach einem der Ansprüche 1 bis 3, worin in a2) und b3) zumindest ein Teil der Qualitätswerte des drahtlosen Links basierend auf Blinddatenpaketen bestimmt wird.

6. Drahtlose Kommunikationsvorrichtung (10, 100), umfassend: M Transceiver (132, 134), mit M≥2; N Antennen (A1-A6), mit N>M, deren jede mit zumindest einem der M Transceiver (132, 134) verbindbar ist; ein Schaltsystem (120), das dazu ausgelegt ist, jeden der M Transceiver (132, 134) mit nur einer der N Antennen (A1 -A6) auf einmal zu verbinden; und Module, ausgelegt zum:
a) Betreiben der Vorrichtung (10, 100) gemäß einem Normalmodus, worin:
a1) die M Transceiver (132, 134) mit M der N Antennen (A1-A6) verbunden werden, um M Wege (1, 2) zu bilden, um Datenpakete von/zu einer anderen Kommunikationsvorrichtung (10, 100) über einen drahtlosen Link zu empfangen und zu senden;
a2) Qualitätswerte des drahtlosen Links für die so verbundenen M Antennen (A1-A6) bestimmt werden;
b) am Ende des normalen Betriebsmodus die Vorrichtung (10, 100) gemäß einem Testmodus zu betreiben, um die besten Antennen (A1-A6) zu identifizieren;
b1) von den M Antennen (A1-A6), m beste Antennen (A1-A6), die während des normalen Betriebsmodus bessere Qualitätswerte ergaben, von M-m schlechtesten Antennen (A1-A6), die während des normalen Betriebsmodus schlechtere Qualitätswerte ergaben, unterschieden werden, worin 1 < m < M-1;
**gekennzeichnet durch**:
b2) m der M Transceiver (132, 134) den m besten Antennen (A1-A6) verbunden werden und die anderen M-m Transceiver (132, 134) mit jeweiligen M-m Testantennen (A1-A6), die von den N Antennen (A1-A6) ausgewählt wurden und sich zumindest teilweise von den M-m schlechtesten Antennen (A1-A6) unterscheiden, verbunden werden;
b3) Qualitätswerte des drahtlosen Links zumindest für die M-m Testantennen bestimmt werden (A1-A6);
c) am Ende des Testbetriebsmodus, zum Identifizieren der besten Antennen (A1-A6) im Hinblick auf Linkqualitätswerte unter den M-m Testantennen (A1-A6) und den in b1) identifizierten M-m schlechtesten Antennen (A1-A6); und
d) zur Rückkehr zu a), worin in a1) die M Transceiver (132, 134) mit den in b1) identifizierten m besten Antennen (A1-A6) und mit den in c) identifizierten M-m besten Antennen (A1-A6) verbunden werden.

7. Vorrichtung nach Anspruch 6, worin die Vorrichtung ein Zugriffspunkt (100) oder eine Station (10) für ein drahtloses lokales Kommunikationsnetzwerk ist.

8. Drahtloses lokales Kommunikationsnetzwerk, das zumindest einen Zugriffspunkt (100) und zumindest eine Station (10) aufweist, worin die zumindest eine Station (10) eine drahtlose Kommunikationsvorrichtung gemäß Anspruch 6 ist.

9. Drahtloses lokales Kommunikationsnetzwerk nach Anspruch 8, das eine Mehrzahl von Stationen (10) aufweist, worin jede der Mehrzahl von Stationen (10) eine drahtlose Kommunikationsvorrichtung gemäß Anspruch 6 ist.

10. Drahtloses lokales Kommunikationsnetzwerk nach Anspruch 8, worin der zumindest eine Zugriffspunkt (100) eine drahtlose Kommunikationsvorrichtung gemäß Anspruch 6 ist.

## Revendications

1. Procédé de réception et de transmission de paquets de données dans un dispositif de communication sans fil (10, 100), ledit dispositif (10, 100) comprenant M émetteurs-récepteurs (132, 134), avec M ≥ 2, N antennes (A1 à A6), avec N > M, chacune pouvant être connectée à au moins un des M émetteurs-récepteurs (132, 134), et un système de commutation (120) adapté pour connecter chacun desdits M émetteurs-récepteurs (132, 134) à uniquement une desdites N antennes (A1 à A6) en même temps, le procédé comprenant les étapes consistant à :
a) faire fonctionner le dispositif (10, 100) selon un mode normal (200) dans lequel :
a1) les M émetteurs-récepteurs (132, 134) sont connectés à M desdites N antennes (A1 à A6) de façon à former M trajets (1, 2) pour recevoir et transmettre des paquets de données depuis/vers un autre dispositif de communication (10, 100) sur une liaison sans fil ;
a2) les valeurs de qualité de la liaison sans fil sont déterminées pour les M antennes (A1 à A6) ainsi connectées ;
b) à la fin du mode de fonctionnement normal (201), faire fonctionner le dispositif (10, 100) selon un mode d'essai dans lequel les meilleures antennes (A1 à A6) sont identifiées,
b1) depuis lesdites M antennes (A1 à A6), m meilleures antennes (A1 à A6), qui pendant le mode de fonctionnement normal ont donné de meilleures valeurs de qualité, sont distinguées (202) de M-m plus mauvaises antennes (A1 à A6), qui pendant le mode de fonctionnement normal ont donné des valeurs de qualité plus mauvaises, où 1 < m < M - 1 ;
**caractérisé par** :
b2) m des M émetteurs-récepteurs (132, 134) sont connectés auxdites m meilleures antennes (A1 à A6) et les autres M-m émetteurs-récepteurs (132, 134) sont connectés à M-m antennes d'essai respectives (A1 à A6), choisies parmi lesdites N antennes (A1 à A6) et au moins en partie différentes des M-m plus mauvaises antennes (A1 à A6) (203) ;
b3) les valeurs de qualité de la liaison sans fil sont déterminées au moins pour les M-m antennes d'essai (A1 à A6) (205) ;
c) à la fin de mode du fonctionnement d'essai, identifier les meilleures antennes (A1 à A6), en termes de valeurs de qualité de liaison, parmi les M-m antennes d'essai (A1 à A6) et les M-m plus mauvaises antennes (A1 à A6) identifiées en b1) (206) ;
d) reprendre l'exécution du procédé en commençant par a), où dans a1) les M émetteurs-récepteurs (132, 134) sont connectés aux m meilleures antennes (A1 à A6) identifiées en b1) et aux M-m meilleures antennes (A1 à A6) identifiées en c).

2. Procédé selon la revendication 1, dans lequel les N antennes (A1 à A6) sont du type directionnel dans un plan de référence déterminé.

3. Procédé selon la revendication 1 ou 2, dans lequel le mode de fonctionnement normal a une durée de temps déterminée (Tr) qui est supérieure à une durée de temps déterminée du mode de fonctionnement d'essai (Tu).

4. Procédé selon l'une quelconque des revendications 1 à 3, dans lequel dans a2) au moins une partie des valeurs de qualité de la liaison sans fil pour les M antennes (A1 à A6) est déterminée en se basant sur des paquets de données avec accusé de réception, qui sont traités pendant une période de temps qui est plus courte que la durée de temps du mode de fonctionnement normal.

5. Procédé selon l'une quelconque des revendications 1 à 3, dans lequel dans a2) et dans a3), au moins une partie des valeurs de qualité de la liaison sans fil est déterminée en se basant sur des paquets de données fictifs.

6. Dispositif de communication sans fil (10, 100), comprenant M émetteurs-récepteurs (132, 134), avec M ≥ 2 ; N antennes (A1 à A6), avec N > M, chacune pouvant être connectée à au moins un des M émetteurs-récepteurs (132, 134) ; un système de commutation (120) adapté pour connecter chacun desdits M émetteurs-récepteurs (132, 134) à uniquement une desdites N antennes (A1 à A6) en même temps ; et des modules adaptés :
a) pour faire fonctionner le dispositif (10, 100) selon un mode normal dans lequel : a1) les M émetteurs-récepteurs (132, 134) se connectent à M desdites N antennes (A1 à A6) de façon à former M trajets (1, 2) pour recevoir et transmettre des paquets de données depuis/vers un autre dispositif de communication (10, 100) sur une liaison sans fil ;
a2) les valeurs de qualité de la liaison sans fil sont déterminées pour les M antennes (A1 à A6) ainsi connectées ;
b) à la fin du mode de fonctionnement normal, pour faire fonctionner le dispositif (10, 100) selon un mode d'essai afin d'identifier les meilleures antennes (A1 à A6) :
b1) parmi lesdites M antennes (A1 à A6), m meilleures antennes (A1 à A6), qui pendant le mode de fonctionnement normal ont donné de meilleures valeurs de qualité, sont distinguées des M-m plus mauvaises antennes (A1 à A6), qui pendant le mode de fonctionnement normal ont donné des valeurs de qualités plus mauvaises, dans lequel 1 < m < M - 1 ;
**caractérisé par**
b2) m des M émetteurs-récepteurs (132, 134) sont connectés auxdites m meilleures antennes (A1 à A6) et les autres M-m émetteurs-récepteurs (132, 134) sont connectés à M-m antennes d'essai (A1 à A6) respectives, choisies parmi lesdites N antennes (A1 à A6) et au moins en partie différentes des M-m plus mauvaises antennes (A1 à A6) ; b3) les valeurs de qualité de la liaison sans fil sont déterminées au moins pour les M-m antennes d'essai (A1 à A6) ;
c) à la fin du mode de fonctionnement d'essai, afin d'identifier les meilleures antennes (A1 à A6), en termes de valeurs de qualité de liaison, parmi les M-m antennes d'essai (A1 à A6) et les M-m plus mauvaises antennes (A1 à A6) identifiées en b1) ; et
d) pour retourner en a), où dans a1) les M émetteurs-récepteurs (132, 134) sont connectés aux m meilleures antennes (A1 à A6) identifiées en b1) et aux M-m meilleures antennes (A1 à A6) identifiées en c).

7. Dispositif selon la revendication 6, dans lequel le dispositif est un point d'accès (100) ou une station (10) pour un réseau de communication local sans fil.

8. Réseau de communication local sans fil, comprenant au moins un point d'accès (100) et au moins une station (10), dans lequel ladite au moins une station (10) est un dispositif de communication sans fil selon la revendication 6.

9. Réseau de communication local sans fil selon la revendication 8, comprenant une pluralité de stations (10), dans lequel chacune de ladite pluralité de stations (10) est un dispositif de communication sans fil selon la revendication 6.

10. Réseau de communication local sans fil selon la revendication 8, dans lequel ledit au moins un point d'accès (100) est un dispositif de communication sans fil selon la revendication 6.
